# EUROPÄISCHE PATENTSCHRIFT

(11) **EP 2 028 030 B1**
(45) Veröffentlichungstag und Bekanntmachung des Hinweises auf die Patenterteilung: **12.05.2010**
(21) Anmeldenummer: 08013822.5
(22) Anmeldetag: 01.08.2008
(51) Int. Cl.: B60J 1/20

(54) **Heckscheibenrollo mit Winkeltragschine**
Rear window roller with an angle profile mounting rail
Store de lunette arrière doté d'un rail de support de cornière

(30) Priorität: 20.08.2007 DE 102007039255
(43) Veröffentlichungstag der Anmeldung: 25.02.2009
(73) Patentinhaber: BOS GmbH & Co. KG, 73760 Ostfildern (DE)
(72) Erfinder: Weinbrenner, Harry, 72644 Oberboihingen (DE); Bühl, Olaf, 73095 Albershausen (DE)
(74) Vertreter: Rüger, Barthelt & Abel Patentanwälte

(56) Entgegenhaltungen:
- EP-A- 1 182 067
- EP-A- 1 211 110
- EP-A- 1 533 157
- EP-A- 1 598 517
- WO-A-02/38404
- FR-A- 2 597 919
- US-A- 4 898 224

## Beschreibung

Heckscheibenrollos für Kraftfahrzeuge haben sich mittlerweile im Markt sehr erfolgreich etabliert. Sie werden zwischenzeitlich nicht nur in den Fahrzeugen der oberen Preisklasse eingesetzt sondern auch in zunehmendem Maße im Bereich der unteren mittleren Preisklasse. Dementsprechend steigt der Kostendruck.

Solche Heckscheibenrollos bestehen aus einer unterhalb der Hutablage drehbar gelagerten Wickelwelle, an der mit einer Kante die Rollobahn befestigt ist. Die gegenüberliegende Kante ist mit einem Zugstab verbunden. Der Zugstab wird endseitig in Führungsschienen geführt, die parallel zu den Längskanten der Heckscheibe verlaufen. Diese Führungsschienen sind, je nach Aufwand, an der Heckscheibe befestigt oder an der Innenverkleidung oder sie sind in die Innenverkleidung integriert.

Ein beachtlicher Kostenfaktor ist hierbei jenes Rahmenbauteil, an dem die beiden Wickelwellenlager befestigt sind.

Ausgehend hiervon ist es Aufgabe der Erfindung ein neues Heckscheibenrollo zu schaffen, bei dem die Herstellungskosten deutlich gesenkt sind.

Das Dokument EP 1533157A offenbart ein Heckscheibenrollo (14) für Kraftfahrzeuge,
mit einer Wickelwelle (19),
mit zwei Wickelwellenlagerstücken (41), die dazu eingerichtet sind zwischen sich die Wickewelle (19) drehbar zu lagern,
mit einer Verbindungsstange (42),
mit einer Rollobahn (15), die mit einer Kante an der Wickelwelle (19) befestigt ist und einen Zuschnitt entsprechend dem betreffenden Heckfenster (4) aufweist und deren von der Wickelwelle (19) abliegende Kante an einem Zugstab (22) befestigt ist,
mit zwei seitlich dem Fenster (4) angeordneten Führungsschienen (16), in denen der Zugstab (22) geführt ist, und
mit einer Antriebseinrichtung (21,33) wenigstens zum Einfahren des Heckscheibenrollos (14).

Der Gegenstand des Anspruchs 1 unterscheidet sich von dem Heckschebenrollo in EP 1533157 A dadurch, dass die Verbindungsstange in Form einer einen L-Querschnitt aufweisenden Winkleschiene aus zwei im rechten Winkel zueinander angeordneten Flanschen besteht.

Das neue Heckscheibenrollo weist eine Wickelwelle auf, an der mit einer Kante eine Rollobahn befestigt ist. Die andere Kante der Rollobahn ist mit einem Zugstab verbunden, der in Führungsschienen geführt ist.

Zum Lagern der Wickelwelle sind zwei Wickelwellenlagerstücke vorgesehen, die über eine Verbindungsstange miteinander verbunden sind. Die Verbindungsstange besteht aus einem Winkelprofil, das einen über die Länge durchgehenden konstanten Querschnitt hat und sich aus zwei Flanschen oder Schenkeln zusammensetzt.

Obwohl Winkelschienen oder Winkelprofile ein sehr ungünstiges Torsionsverhalten zeigen, und auch hinsichtlich ihrer Biegefestigkeit problematisch sind, hat sich erstaunlicherweise gezeigt, dass, abweichend von früheren Überlegungen die Festigkeit einer solchen Wickelschiene vollkommen ausreicht, um die Wickelwellenlagerstücke zu halten. Dabei ist zu beachten, dass die Breite der Schenkel oder Flansche aus Platzgründen vergleichsweise sehr klein ist und auch die Materialstärke nur gering ist. Gleichwohl reicht die Festigkeit erstaunlicherweise aus, und es besteht keine Notwendigkeit als Verbindungsstange die bisher eingesetzten und verglichen damit sehr teuren Rohre zu verwenden. Rohre zeigen an sich eine wesentlich größere Biege- und Torsionssteifigkeit und werden deswegen vom Konstrukteur intuitiv bevorzugt.

Die erfindungsgemäß vorgesehene Winkelprofilschiene zum Verbinden der beiden Wickelwellenlagerstücke genügt bei den hier auftretenden Kräften vollkommen.

Abgesehen von der signifikanten Kostenreduktion ergibt sich auch noch eine Platzersparnis, weil die Wickelwelle in der Innenecke der Winkelprofilschiene untergebracht werden kann. Der Rolloballen ist dadurch auch zum Teil mechanisch geschützt.

Die Schenkel der Winkelschiene können unterschiedliche Breite aufweisen. Beispielsweise kann der in der Einbaustellung unten liegende Schenkel breiter sein als der vertikal aufragende, so dass er gleichzeitig auch als Befestigungsfläche für Teile der Antriebseinrichtung dienen kann.

Eine sehr kompakte Baueinheit wird erreicht, wenn der Spalt zwischen einem der beiden Schenkeln unter der Außenumfangsfläche des Ballens, den die aufgewickelte Rollobahn auf der Wickelwelle bildet, zwischen ca. 5 mm und 20 mm liegt.

Günstige Platzverhältnisse im eingebauten Zustand und gute Festigkeitsverhältnisse werden erreicht, wenn die Verbindungsstangen derart angeordnet ist, dass sie bei gebrauchsfertig montiertem Heckscheibenrollo mit einem Flansch vertikal ausgerichtet ist, während der andere Flansch horizontal liegt.

Die Verbindungsstange kann so angeordnet sein, dass der vertikal aufragende Flansch der Einmündungsstelle der Führungsschiene in das Wickelwellenlagerstück zumindest angenähert diametral gegenüber liegt. Hierdurch kann gleichzeitig eine Abschirmungswirkung für die Wickelwelle erzeugt werden, wenn im Kofferraum sonst keine weiteren Blenden zum Abdecken des Heckscheibenrollos vorhanden sind.

Das Wickelwellenlagerstück kann einen Fortsatz aufweisen, mit dem es mit einem Schenkel der Verbindungsstange verbunden ist.

Die Verbindung zwischen dem Wickelwellenlagerstück und der Verbindungsstange kann durch Blindnieten erfolgen. Eine solche Verbindung ist dauerhaft und leicht herzustellen. Sie eignet sich insbesondere auch dann, wenn das Wickelwellenlagerstück beispielsweise als Kunststoffspritzteil hergestellt ist.

Besonders günstige Montageverhältnisse ergeben sich, wenn das Wickelwellenlagerstück eine Verbindungseinrichtung aufweist, mit der die zugehörige Führungsschiene formschlüssig anbindbar ist.

Die Antriebseinrichtung des Heckfensterrollos kann einen Federmotor umfassen. Dieser Federmotor kann mit der Wickelwelle gekuppelt sein. Für die Ausgestaltung des Federmotors kommen eine Vielzahl von Lösungen in Frage, wie Schraubenfedern oder Spiralfedern, die außerhalb oder innerhalb der Wickelwelle untergebracht sind.

Wenn das Heckscheibenrollo elektrisch betätigt ist, kann ferner ein Getriebemotor vorhanden sein. Der Getriebemotor kann auf der Verbindungstange montiert sein.

Um den Getriebemotor mit dem Zugstab zu verbinden, können linienförmige Verbindungsmittel vorhanden sein, die ausknicksicher geführt sind.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "hinten" sowie "links" und "rechts" beziehen sich auf die normale Einbaulage bzw. die Terminologie bei Kraftfahrzeugen.

In der Zeichnung ist ein Ausführungsbeispiel des Gegenstandes der Erfindung dargestellt.
- Fig. 1: zeigt in einer perspektivischen Darstellung den aufgebrochenen Fondbereich eines Kraftfahrzeugs.
- Fig. 2: veranschaulicht den prinzipiellen Aufbau des Heckscheibenrollos nach Fig. 1.
- Fig. 3: zeigt in einer verkürzten Form die Verbindungsstange zusammen mit den Wickelwellenlagerstücken und der Wickelwelle in einer Ansicht von hinten.
- Fig. 4: zeigt eines der Wickelwellenlagerstücke mit Blick aus der Sicht der Wickelwelle unter Veranschaulichung der Lage der Verbindungsstange.

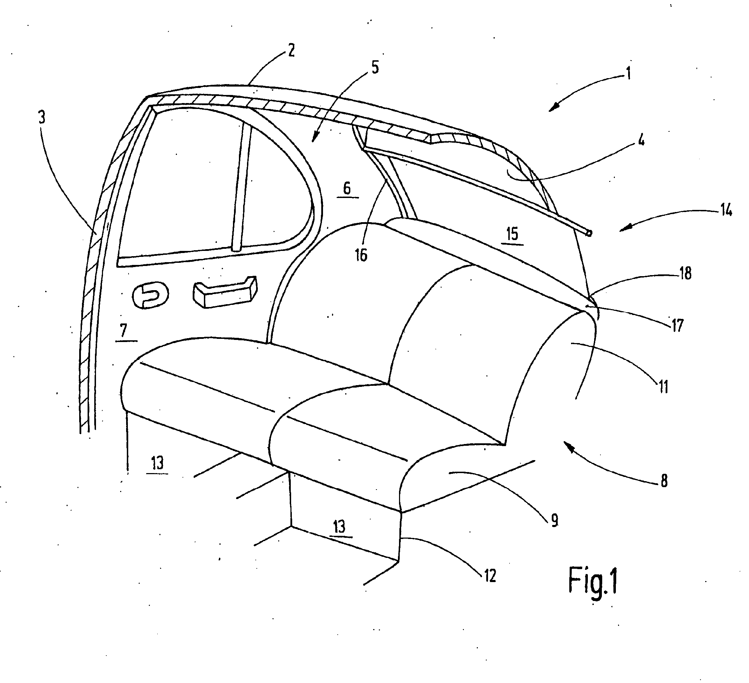

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogene Rollobahn sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft.

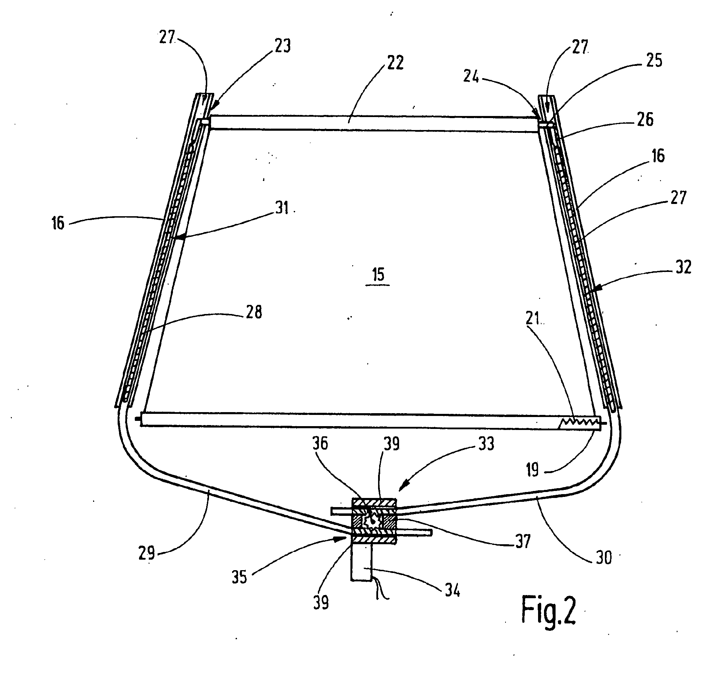

Der prinzipelle Aufbau des Heckscheibenrollos 14 ergibt sich aus Fig. 2.

Unterhalb der Hutablage 17 ist, wie aus Fig. 2 zu ersehen ist, eine Wickelwelle 19 drehbar gelagert, an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert und andernends in der Wickelwelle 19 festgelegt ist.

Die Rollobahn 15 weist einen etwa trapezförmigen Zuschnitt auf und ist an ihrer von der Wickelwelle 19 abliegenden Kante mit einer schlauchförmigen Schlaufe 22 versehen. Durch die schlauchförmige Schlaufe 22 führt ein rohrförmiges Auszugsprofil oder Spriegel, in dem Führungsstücke 23 und 24 teleskopartig gelagert sind. Die Führungsstücke 23 und 24 weisen einen Halsteil 25 auf, der einen kleineren Durchmesser aufweist als ein sich daran anschließendes Führungsglied 26, das die Gestalt eines kurzen zylinderförmigen Abschnitts aufweist. Die Führungsstücke 26 laufen in den Führungsschienen 16, die neben den beiden Seitenkanten des Heckfensters 4 angeordnet sind.

Jede der Führungsschienen 16 enthält eine hinterschnittene Führungsnut 27, die sich in Richtung auf die Rollobahn 15 in einem Führungsschlitz 28 öffnet. In der Kammer der Führungsnut 27 läuft das Führungstück 26.

Das untere Ende jeder Führungsschiene 16 ist mit einem Führungsrohr 29, 30 verbunden, in denen ausknicksicher zwei biegsame Schubglieder 31 und 32 geführt sind, die mehr oder weniger weit in die Führungsschienen 16 vorgeschoben sind. Die biegsamen Schubglieder 31 und 32 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsschienen 16 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31 und 32 formschlüssig. Diese Schubglieder 31 und 32 laufen tangential an die an diametral gegenüberliegenden Seiten an dem Stirnzahnrad 37 vorbei und sind hierzu in entsprechenden Bohrungen 38 und 39 geführt.

Durch Ingangsetzen des Getriebemotors 33 werden die Schubglieder 31, 32 wahlweise weiter in die Führungsschienen 16 vorgeschoben oder aus diesen zurückgezogen. Der Bewegung der Schubglieder 31, 32 folgen die Führungsstücke 23 und 24, die mit den Suflexwellen verbunden sind. Diese werden mit Hilfe des Federmotors 21 gegen die freien Enden der Schubglieder 31, 32 anliegend gehalten, die sich in den Führungsnuten 27 befinden.

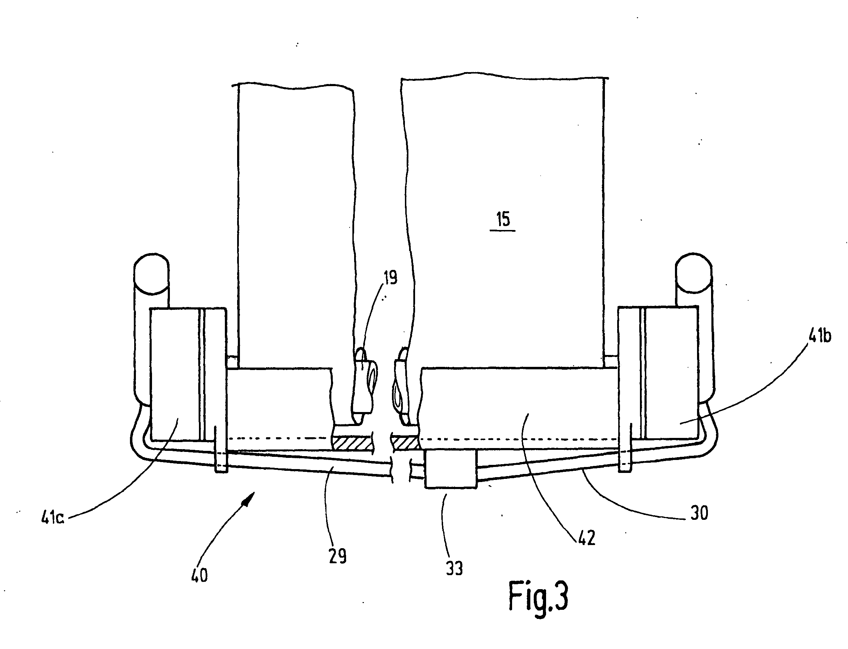

Um das Gebilde, bestehend aus der Wickelwelle 19, den Führungsrohren 29 und 30 sowie den Getriebemotor 35 bereits vor der endgültigen Montage in dem Kraftfahrzeug zusammen zu halten, ist eine Sockeleinrichtung 40 vorgesehen, die in Fig. 3 gezeigt ist. Zu der Sockeleinrichtung 40 gehören zwei Endstücke 41a und 41b sowie eine Verbindungsstrebe 42, an der der Getriebemotor 35 befestigt ist.

Die beiden Endstücke 41a und 41b sind zueinander spiegelbildlich, so dass es genügt im Weiteren das Endstück 41a im Einzelnen weiter zu beschreiben.

Der Abstand der Endstücke 41a und 41b voneinander ist der Länge der Wickelwelle 19 entsprechend gewählt.

Die Darstellungen des Endstücks 41a ist in den Figuren stark vereinfacht, in dem Sinne, dass nicht jede Verstärkungsrippe widergegeben ist um die Zeichnung nicht mit Details zu überladen, die für das Verständnis der Erfindung nicht wesentlich sind. Es versteht sich von selbst, dass zum Zwecke der Materialersparnis geringe Wandstärken gewählt werden, und diese Bereiche durch entsprechende Stege, Pfeiler oder Rippen in der dem Fachmann geläufigen Weise verstärkt werden.

Im Übrigen ist das Endstück 41a, soweit nichts anderes angegeben ist, einstückig.

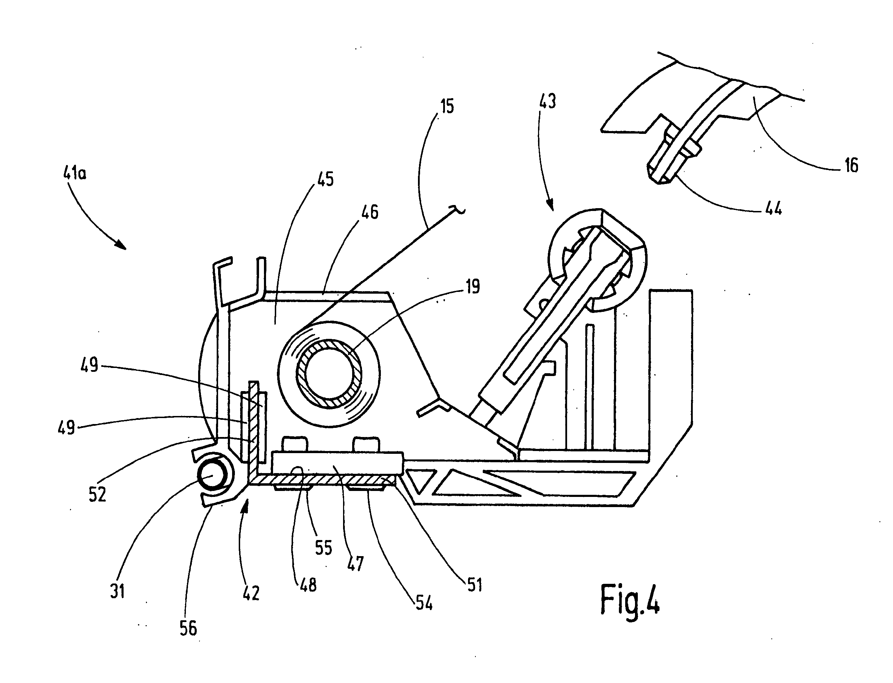

Fig. 4 zeigt das aus Kunststoff einstückig gespritzte Wickelwellenlagerstück 41a in Verbindung mit einer Kuppeleinrichtung 43, in die das untere Ende der zugehörigen Führungsschiene 16 mit einem Einsteckzapfen 44 einsteckbar ist.

Zu dem Wickelwellenstück 41a gehört eine vertikale Seitenwand 45 mit einem rechtwinkelig auf den Betrachter zu vorstehenden Lagerzapfen als Lager für die Wickelwelle 19.

Die Seitenwand 45 wird oben und hinten von einem von der Seitenwand 45 aufragenden kurzen Kragen 46 umgeben. Der Kragen 46 bildet unten einen Fortsatz 47 in Form eines vierkantigen Flachprofils, das in dieselbe Richtung zeigt wie der Lagerzapfen für die Wickelwelle 19. Der Flansch 47 zeigt auf das gegenüberliegende Endstück 41b. Er bildet eine plane untere Anlagefläche 48.

Hinter der Wickelwelle 19 sind zwei Laschen 49 angeformt, die zwischen sich einen Spalt begrenzen.

Die Verbindungsstange 42 ist eine Winkelprofilschiene aus zwei ebenen geraden Schenkeln oder Flanschen 51, 52, die im rechten Winkel zueinander stehen. Die Verbindungsstange 42 steckt an dem dem Lagerstück 41a benachbarten Ende mit dem Flansch 52 in dem Schlitz, den die beiden Laschen 49 zwischen sich begrenzen. Der andere Flansch 51 liegt von unten gegen die Montagefläche 48 des Fortsatz 47 vollflächig an. In der lagerichtigen Positionierung des Flansches 51 zu dem Fortsatz 47 fluchten zwei dort vorhandene Lochgruppen miteinander, durch die zwei Blindnieten 54, 55 hindurchführen. Ihr Kopf liegt gegen die Unterseite des Flansch 51 an.

Die Verbindungsstrebe 42 ist das einzige Teil, das vor dem Einbau in ein Kraftfahrzeug die beiden Wickelwellenlagerstücke 41a und 41b aneinander befestigt um die Wickelwellenlagerstücke 41a und 41b mit der Wickelwelle 19 zusammen zu halten. Die Verbindungsstrebe 42 dient vor dem Einbau auch als Träger für den Getriebemotor 33 und damit als Träger für die Führungsrohre 29, 30 sowie die in Verlängerung davon verlaufenden Speicherrohre. Der Getriebemotor 33 ist an der Unterseite des Flansches 54 befestigt.

Der Vollständigkeit halber sei noch eine Gabel 56 erwähnt, die neben der Außenecke der Verbindungstange 42 an dem Wickelwellenlagerstück 41a angeformt ist um das zugehörige Führungsrohr 29 zu halten.

Im Einbauzustand kann die wie vorstehend beschriebene Baugruppe zusätzlich an der Unterseite der Hutablage befestigt sein und dadurch weiteren Halt bekommen.

Wie aus den Figuren erkennbar schützt die Verbindungsstange 42, in deren Innenecke die Wickelwelle 19 verläuft, den darauf befindlichen Balle aus Rollobahn aus der Sicht des Kofferraums und von der Unterseite her.

Ein Heckscheibenrollo wiest eine wickelwelle auf, die zwischen Wickelwellenlagerstücken drehbar gelagert ist. die beiden Wickelwellenlagerstücke werden durch eine Verbindungstrebe aneinander befestigt. Die Verbindungsstrebe besteht aus einer Winkelprofilschiene.

## Patentansprüche

1. Heckscheibenrollo (14) für Kraftfahrzeuge,
mit einer Wickelwelle (19),
mit zwei Wickelwellenlagerstücken (41), die dazu eingerichtet sind zwischen sich die Wickewelle (19) drehbar zu lagern,
mit einer Verbindungsstange (42), in Form einer einen L-Querschnitt aufweisenden Winkelschiene aus zwei im rechten Winkel zueinander angeordneten Flanschen (51,52),
mit einer Rollobahn (15), die mit einer Kante an der Wickelwelle (19) befestigt ist und einen Zuschnitt entsprechend dem betreffenden Heckfenster (4) aufweist und deren von der Wickelwelle (19) abliegende Kante an einem Zugstab (22) befestigt ist,
mit zwei seitlich dem Fenster (4) angeordneten Führungsschienen (16), in denen der Zugstab (22) geführt ist, und
mit einer Antriebseinrichtung (21,33) wenigstens zum Einfahren des Heckscheibenrollos (14).

2. Heckscheibenrollo nach Anspruch 1, **dadurch gekennzeichnet, dass** die beiden Schenkel (51,52) der Verbindungsstange (42) eine unterschiedliche Breite aufweisen.

3. Heckscheibenrollo nach Anspruch 1, **dadurch gekennzeichnet, dass** der Abstand der Schenkel (51,52) von der Außenseite des auf der Wickelwelle (19) gebildeten Ballens der aufgewickelten Rollobahn (15) zwischen 5 mm und 20 mm liegt.

4. Heckscheibenrollo nach Anspruch 1, **dadurch gekennzeichnet, dass** die Verbindungsstange (42) derart angeordnet ist, dass bei in der Gebrauchsstellung montiertem Heckscheibenrollo (14), der eine Flansch (52) des Winkelprofils angenähert vertikal und der andere (51) angenähert horizontal verläuft.

5. Heckscheibenrollo nach Anspruch 1, **dadurch gekennzeichnet, dass** im montierten Zustand der vertikal verlaufende Flansch (52) sich auf jener Seite der Wickelwelle (19) befindet, die gegenüber den abgehenden Führungsschienen (16) diametral liegt.

6. Heckscheibenrollo nach Anspruch 1, **dadurch gekennzeichnet, dass** das Wickelwellenlagerstück (41) einen Fortsatz (47) aufweist, mit dem das Wickelwellenlagerstück (41) mit einem Schenkel (51) der Verbindungsstange (42) zu verbinden ist.

7. Heckscheibenrollo nach Anspruch 1, **dadurch gekennzeichnet, dass** zur Verbindung Blindnieten (54,55) vorgesehen sind.

8. Heckscheibenrollo nach Anspruch 1, **dadurch gekennzeichnet, dass** das Wickelwellenlagerstück (41) eine Verbindungseinrichtung (43) zum formschlüssigen Anbinden der Führungsschiene (16), die dem Wickelwellenlagerstück zugeordnet ist.

9. Heckscheibenrollo nach Anspruch 1, **dadurch gekennzeichnet, dass** die Antriebseinrichtung (21,33) einen Federmotor (21) umfasst.

10. Heckscheibenrollo nach Anspruch 9, **dadurch gekennzeichnet, dass** der Federmotor (21) mit der Wickelwelle (19) gekuppelt ist.

11. Heckscheibenrollo nach Anspruch 1, **dadurch gekennzeichnet, dass** die Antriebseinrichtung (21,33) einen Getriebemotor (33) umfasst.

12. Heckscheibenrollo nach Anspruch 11, **dadurch gekennzeichnet, dass** linienförmige Antriebsglieder (31,32) vorgesehen sind, die den Getriebemotor (33) mit dem Zustab (22) kuppeln.

13. Heckscheibenrollo nach Anspruch 1, **dadurch gekennzeichnet, dass** die linienförmigen Antriebsglieder (31,32) ausknicksicher geführt sind.

14. Heckscheibenrollo nach Anspruch 1, **dadurch gekennzeichnet, dass** die linienförmigen Antriebsglieder (31,32) auf ihrer Außenseite eine Verzahnung tragen.

## Claims

1. Rear window roller blind (14) for motor vehicles,
with a winding shaft (19),
with two winding shaft bearing pieces (41), which are arranged to rotatably mount the winding shaft (19) between them,
with a connection rod (42) in the form of an angle rail, which has an L-shaped cross-section and comprises two flanges (51, 52) arranged at a right angle to one another, with a blind sheet (15), which is fastened at one edge to the winding shaft (19) and has a blank corresponding to the respective rear window (4), and its edge remote from the winding shaft (19) is fastened to a pull rod (22),
with two guide rails (16), which are arranged laterally of the window (4) and in which the pull rod (22) is guided, and
with a drive means (21, 33) at least for retracting the rear window roller blind (14).

2. Rear window roller blind according to claim 1, **characterised in that** the two legs (51, 52) of the connection rod (42) have a different width.

3. Rear window roller blind according to claim 1, **characterised in that** the distance of the legs (51, 52) from the outer surface of the bundle of the wound-up blind sheet (15) formed on the winding shaft (19) lies between 5 mm and 20 mm.

4. Rear window roller blind according to claim 1, **characterised in that** the connection rod (42) is arranged in such a way that when the rear window roller blind (14) is mounted in the position of use one flange (52) of the angle profile runs approximately vertically and the other (51) approximately horizontally.

5. Rear window roller blind according to claim 1, **characterised in that** in the mounted state the vertically running flange (52) is located on the side of the winding shaft (19) lying diametrically opposite the downward running guide rail (16).

6. Rear window roller blind according to claim 1, **characterised in that** the winding shaft bearing piece (41) has an extension (47), with which the winding shaft bearing piece (41) is to be connected to a leg (51) of the connection rod (42).

7. Rear window roller blind according to claim 1, **characterised in that** blind rivets (54, 55) are provided for connection.

8. Rear window roller blind according to claim 1, **characterised in that** the winding shaft bearing piece (41) [?] a connection means (43) for positive attachment of the guide rail (16) associated with the winding shaft bearing piece.

9. Rear window roller blind according to claim 1, **characterised in that** the drive means (21, 33) comprises a spring motor (21).

10. Rear window roller blind according to claim 9, **characterised in that** the spring motor (21) is coupled to the winding shaft (19).

11. Rear window roller blind according to claim 1, **characterised in that** the drive means (21, 33) comprises a geared motor (33).

12. Rear window roller blind according to claim 11, **characterised in that** linear drive members (31, 32) are provided, which couple the geared motor (33) to the pull rod (22).

13. Rear window roller blind according to claim 1, **characterised in that** the linear drive members (31, 33) are guided so that they are protected against buckling.

14. Rear window roller blind according to claim 1, **characterised in that** the linear drive members (31, 32) bear a toothed arrangement on their outer surface.

## Revendications

1. Store de lunette arrière (14) pour véhicule automobile, qui comprend :
- un arbre d'enroulement (19),
- deux pièces de palier d'arbre d'enroulement (41), conçues pour que l'arbre d'enroulement (19) puisse tourner entre ces paliers,
- une tige de liaison (42) sous la forme d'un rail à section en L, dont les deux ailes (51, 52 font un angle droit,
- une bande de store (15) dont un bord est fixé à l'arbre d'enroulement (19), qui présente une découpe correspondant à la lunette arrière (4) concernée et dont l'autre bord qui est éloigné de l'arbre d'enroulement (19) est fixé à une barre de traction (22),
- deux rails de guidage (14) disposés latéralement par rapport à la lunette arrière (4) et dans lesquels est guidée la barre de traction (22),
- un dispositif d'entraînement (21, 23) servant au moins à dérouler le store de lunette arrière (14).

2. Store de lunette arrière selon la revendication 1, **caractérisé en ce que** les deux ailes (51, 52) de la tige de liaison (42) ont des largeurs différentes.

3. Store de lunette arrière selon la revendication 1, **caractérisé en ce que** la distance entre les ailes (51, 52) et la face externe de la balle que forme le store de lunette arrière (15) quand il est enroulé sur l'arbre d'enroulement (15) est comprise entre 5 mm et 20 mm.

4. Store de lunette arrière selon la revendication 1, **caractérisé en ce que** la tige de liaison (42) est disposée de manière que quand le store de lunette arrière (14) est en position de service, une aile (52) du profilé angulaire est à peu près verticale et l'autre (51) est à peu près horizontale.

5. Store de lunette arrière selon la revendication 1, **caractérisé en ce qu'**à l'état monté, l'aile (52) qui est verticale se trouve, par rapport à l'arbre d'enroulement (19), du côté éloigné diamétralement des rails de guidage (16) en position de départ.

6. Store de lunette arrière selon la revendication 1, **caractérisé en ce que** la pièce de palier d'arbre d'enroulement (41) présente un appendice (47) qui sert à relier cette pièce (41) à une aile (51) de la lige de liaison (42).

7. Store de lunette arrière selon la revendication 6, **caractérisé en ce que** pour assurer la liaison, il est prévu des rivets aveugles (54, 55).

8. Store de lunette arrière selon la revendication 1, **caractérisé en ce que** la pièce de palier d'arbre d'enroulement (41) présente un dispositif de liaison (43) pour le relier, avec verrouillage par combinaison de formes, au rail de guidage (16) qui lui est associé.

9. Store de lunette arrière selon la revendication 1, **caractérisé en ce que** le dispositif d'entraînement (21, 33) comprend un système à ressort.

10. Store de lunette arrière selon la revendication 1, **caractérisé en ce que** le système à ressort est accouplé à l'arbre d'entraînement (19).

11. Store de lunette arrière selon la revendication 1, **caractérisé en ce que** le dispositif d'entraînement (21, 33) comprend un motoréducteur (33).

12. Store de lunette arrière selon la revendication 11, **caractérisé en ce qu'**il est prévu des organes d'entraînement (31, 32) de forme linéaire, qui accouplent le motoréducteur (33) à la tige de traction (22).

13. Store de lunette arrière selon la revendication 1, **caractérisé en ce que** les organes d'entraînement (31, 32) de forme linéaire sont guidés sans risque de flambage.

14. Store de lunette arrière selon la revendication 1, **caractérisé en ce que** les organes d'entraînement (31, 32) de forme linéaire portent chacun sur sa face externe une denture.
